# EUROPÄISCHE PATENTSCHRIFT

(11) **EP 0 479 763 B1**
(45) Veröffentlichungstag und Bekanntmachung des Hinweises auf die Patenterteilung: **26.10.1994**
(21) Anmeldenummer: 91890218.0
(22) Anmeldetag: 19.09.1991
(51) Int. Cl.: B60C 11/11

(54) **Fahrzeugluftreifen**
Pneumatic tyre for vehicles
Bandage pneumatique pour véhicules

(30) Priorität: 04.10.1990 AT 2004/90
(43) Veröffentlichungstag der Anmeldung: 08.04.1992
(73) Patentinhaber: Semperit Reifen Aktiengesellschaft, A-2514 Traiskirchen (AT)
(72) Erfinder: Stumpf, Horst, Dipl.-Ing., A-2551 Enzesfeld (AT)
(74) Vertreter: Vinazzer, Edith

(56) Entgegenhaltungen:
- EP-A- 0 347 817
- DE-U- 9 005 030
- US-A- 1 956 011
- PATENT ABSTRACTS OF JAPAN,Band 1, Nr. 1131 (M-584)24. April 1987 & JP-A-61 271 104

## Beschreibung

Die Erfindung betrifft einen Fahrzeugluftreifen in Radialbauart mit einem drehrichtungsgebundenen asymmetrischen Laufflächenprofil, welches durch Quernuten und durch insbesondere gerade verlaufende Umfangsnuten voneinander getrennte Profilelemente aufweist, wobei jede Quernut die Lauffläche von Laufflächenrand zu Laufflächenrand ohne Unterbrechung durchläuft und, über die Laufflächenbreite betrachtet, zumindest im wesentlichen einen gepfeilten oder bogenförmigen Gesamtverlauf aufweist und wobei jeder Quernut zwei in der Abwicklungsebene des Profiles als Gerade gestaltete Basislinien zugeordnet sind, die die einander zugehörigen Endpunkte der Quernutränder an den Laufflächenbegrenzungslinien miteinander verbinden.

Die Optimierung des Reifenprofiles hinsichtlich der Geräuschentwicklung durch Reifen und Fahrbahn steht in Konflikt mit einem guten Naßgriff, gutem Aquaplaningverhalten und gutem Abriebswiderstand. Es gibt nun schon seit längerem Methoden, das Profilgeräusch zu reduzieren. So ist es insbesondere üblich, die Methode der "Pitchlängenvariation" anzuwenden, wonach die über den Reifenumfang aufeinanderfolgenden, gleichartigen Profilelemente mit unterschiedlichen Umfangslängen, auch Pitchlängen genannt, versehen werden Werden diese unterschiedlichen Pitchlängen nach bestimmten Kriterien aneinandergereiht, werden insbesondere die auftretenden Frequenzen auf ein breiteres Frequenzband verteilt. Es entsteht somit ein Frequenzspektrum, in dem die Amplituden der einzelnen Frequenzen geringer sind als die der ursprünglichen Grundfrequenz. Das Abrollgeräusch wird dadurch diffuser, weniger tonhaltig und subjektiv leiser.

Zu diesem Thema existiert auch eine größere Anzahl von Patentliteratur und es wird in diesem Zusammenhang beispielsweise auf die US-PS 4,327,792, die US-PS 4,598,748 und die EP-A 0 246 997 verwiesen. In der Praxis unterliegt die Wahl der Pitchlängen bzw. der Pitchlängenvariation bestimmten Einschränkungen, da Pitches nicht in beliebiger Länge bzw. Kürze gewählt werden können, um andere Reifeneigenschaften, wie Fahrverhalten und Aquaplaningverhalten nicht zu verschlechtern. Drehrichtungsgebundene und asymmetrisch gestaltete Laufflächenprofile haben sich in letzter Zeit insbesondere für Reifen, die für hohe Laufgeschwindigkeiten vorgesehen sind, durchgesetzt, da sie herkömmlichen Profilgestaltugen hinsichtlich Naßgriff, Aquaplaningverhalten und Fahrverhalten überlegen gestaltet werden können. Es ist ferner auch bekannt, daß am Laufflächenprofil durch Anwendung der Pitchlängen-Modulation zur Geräuschminimierung gesetzte Maßnahmen, die sich beispielsweise günstig auf das Vorbeifahrgeräusch, welches objektiv meßbar ist, auswirken, nicht unbedingt eine Verbesserung des Fahrzeug-Innengeräusches, welches nach subjektiven Kriterien zu ermitteln ist, zur Folge haben. Dabei spielt vor allem eine Rolle, daß im Fahrzeuginneren insbesondere jene Geräusche hörbar sind, die durch Körperschallübertragung entstehen. Ein Fahrzeugluftreifen gemäß dem Oberbegriff des Anspruchs 1 ist aus EP-A-0 347 817 bekannt.

Hier setzt nun die Erfindung ein, deren Aufgabe darin besteht, einen Reifen der eingangs genannten Art hinsichtlich des Profilgeräusches zu verbessern, wobei die zu setzenden Maßnahmen sowohl eine günstige Auswirkung auf das Vorbeifahrgeräusch als auch auf das Fahrzeug-Innengeräusch zeigen sollen.

Gelöst wird die gestellte Aufgabe erfindungsgemäß dadurch, daß der Winkel der Basislinien gegenüber dem Reifenäquator von Quernut zu Quernut und/oder von Basislinie zu Basislinie in einem Bereich variiert wird.

Es hat sich gezeigt, daß mit Reifen, die nach der Erfindung gestaltete Laufflächenprofile besitzen, eine günstige Beeinflussung des Fahrzeug-Innengeräusches erzielbar ist, was insbesondere darauf zurückzuführen ist, daß durch die Variation der Neigungswinkel der Basislinien über den Umfang bzw. zumindest über Umfangsbereiche , eine sich wiederholende Quernutneigung vermieden wird.

Besonders vorteilhafte Ausgestaltungen der Erfindung sind in den Unteransprüchen enthalten.

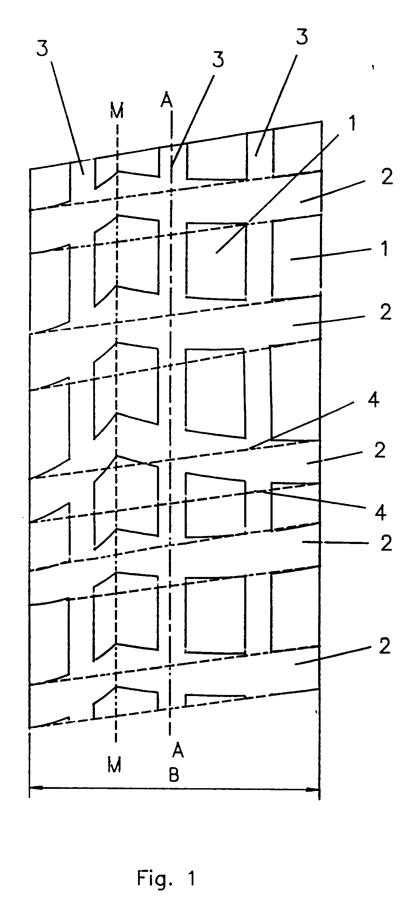

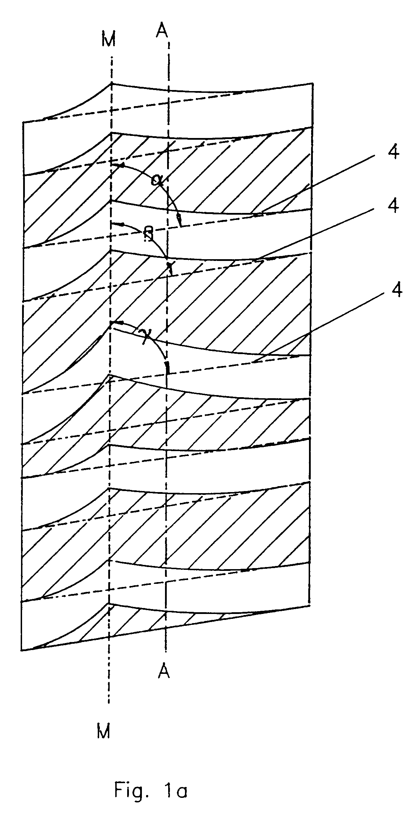

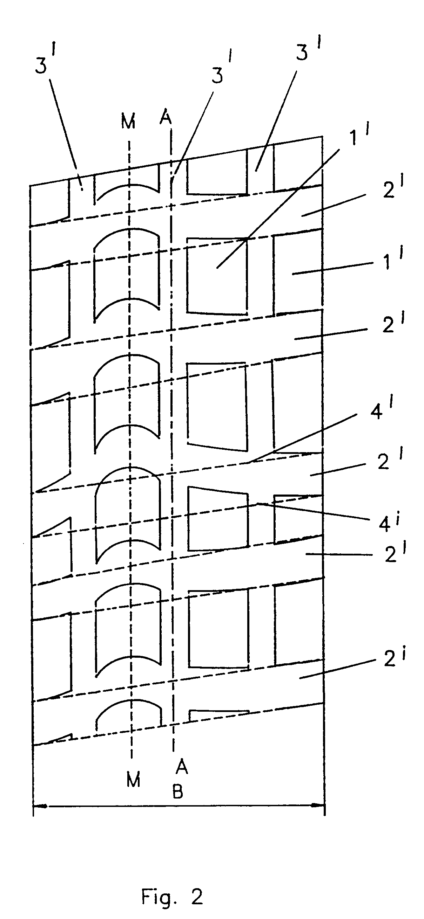

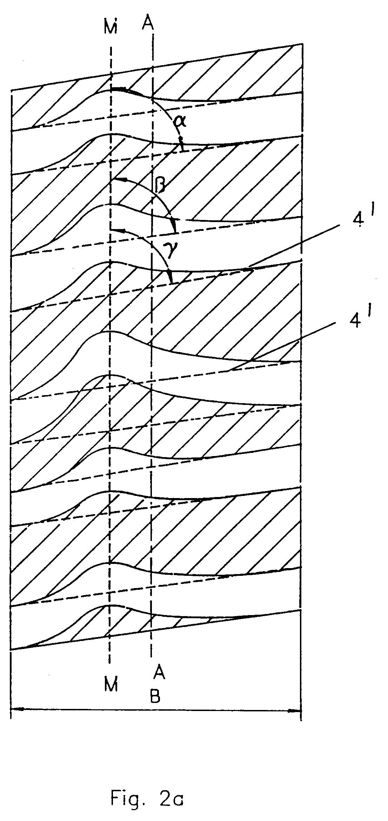

Weitere Merkmale, Vorteile und Einzelheiten der Erfindung werden nun anhand der Zeichnung, welche zwei Ausführungsbeispiele darstellt, näher beschrieben. Dabei zeigen Fig. 1 und Fig. 1a sowie Fig. 2 und Fig. 2a verschiedene Ausführungsvarianten und zwar einerseits als Teilabwicklungen von nach der Erfindung gestalteten Laufflächenprofilen (Fig. 1, Fig. 2), andererseits zugehörige schematisierte Darstellungen (Fig. 1a, Fig. 2a).

Anhand des Ausführungsbeispieles gemäß Fig. 1 werden nun die grundsätzlichen Elemente, aus denen sich ein Laufflächenprofil nach der Erfindung zusammensetzt, beschrieben. Durch Quernuten 2 und gerade verlaufende Umfangsnuten 3 ist das Laufflächenprofil in Profilelemente 1 gegliedert. Eine asymmetrische und drehrichtungsabhängige Profilgestaltung ergibt sich dadurch, daß die Quernuten 2, über die Laufflächenbreite B, die der Breite des Reifens in der Bodenaufstandsfläche unter Normaldruck und Normallast entspricht, betrachtet, einen gepfeilten Gesamtverlauf aufweisen. Dabei liegen sämtliche Pfeilspitzen auf einer zur Äquatorlinie A-A parallelen und gegenüber dieser seitlich versetzten Bezugslinie M-M, die somit als "optische" Mittellinie betrachtet werden kann. Dabei ist diese optische Mittellinie M-M jener Reifenseite zuzuordnen, die schließlich der Radaußenseite zugewandt ist. Die Pfeilspitzen kommen beim Abrollen des Reifens zuerst mit dem Untergrund in Berührung. Die optische Mittellinie M-M ist gegenüber der Äquatorlinie A-A um höchstens 20 % der Laufflächenbreite B versetzt.

An den beiden Laufflächenrändern können für jede Quernut 2 je zwei Endpunkte für in der Abwicklungsebene als Gerade gestaltete Basislinien 4 definiert werden. Die genannten Endpunkte stimmen mit den Schnittpunkten der Kanten der Profilelemente 1 mit dem jeweiligen Laufflächenrand überein. Wie Fig. 1a zeigt, gibt es keine Schnittpunkte zwischen jeder Basislinie 4 und ihrer zugehörigen Quernutkante. Gemäß Fig. 1 und Fig. 1a sind sämtliche Basislinien 4 gegenüber der exakten Querrichtung (Axialrichtung) in gleichem Sinn schräg geneigt. Dabei ist die Anordnung so getroffen, daß der Winkel, den die Basislinien 4 mit der Äquatorlinie A-A einschließen, von Basislinie 4 zu Basislinie 4 oder auch von Quernut 2 zu Quernut 2 variiert wird. Bevorzugt wird eine statistische Variation dieses Winkels, von dem in Fig. 1a drei unterschiedliche, nämlich α, β und γ eingezeichnet sind, gewählt. Dabei beträgt der Maximalwinkel 85°, der Minimalwinkel 60°. Die Ausgestaltung eines einzelnen Laufflächenprofiles erfolgt derart, daß der Neigungswinkel um maximal 30° variiert wird, insbesondere um bis zu ± 10°, mindestens um ± 5°.

Die Variation des Neigungswinkels der Basislinien 4 kann auch für eine bestimmte Anzahl von beispielsweise über den Umfang aufeinanderfolgenden Basislinienpaaren oder Basislinien die von vornherein festgelegt werden, erfolgen, wobei das Variationsmuster über den Reifenumfang wiederholt wird.

Es ist besonders günstig, wenn die gepfeilten Quernuten 2 bzw. deren Begrenzungskanten von der Gestalt her Seillinien unter Einzellast entsprechen, wobei die gedachte Last der optischen Mittellinie M-M zuzuordnen ist.

Zur Optimierung der Geräuschentwicklung beim Abrollen des Reifens wird zusätzlich die Umfangslänge der Profilelemente bzw. die Quernutbreite variiert, wobei eine der bekannten Methoden herangezogen werden kann.

Die Fig. 2 und Fig. 2a zeigen ein leicht abgewandeltes Laufflächenprofil, bei dem, wie schon anhand der Fig. 1 und und 1a beschrieben, geneigte Basislinien 4' vorgesehen sind, zur sonstigen Gestaltung des Laufflächenprofiles sind ebenfalls Profilelemente 1', Quernuten 2' und Umfangsnuten 3' vorhanden. Anstelle deer ausgeprägten Pfeilung ist jedoch der Quernutverlauf so gestaltet, daß im Bereich der optischen Reifenmitte (Umfangslinie M-M) ein bogenartiger, kontinuierlicher Übergang gewählt wird. Selbstverständlich ist auch eine derartige Laufflächenprofilgestaltung drehrichtungsgebunden.

## Patentansprüche

1. Fahrzeugluftreifen in Radialbauart mit einem drehrichtungsgebundenen asymmetrischen Laufflächenprofil, welches durch Quernuten (2, 2') und durch, insbesondere gerade verlaufende, Umfangsnuten (3, 3') voneinander getrennte Profilelemente (1, 1') aufweist, wobei jede Quernut (2, 2') die Lauffläche von Laufflächenrand zu Laufflächenrand ohne Unterbrechung durchläuft und über die Laufflächenbreite betrachtet, zumindest im wesentlichen einen gepfeilten oder bogenförmigen Gesamtverlauf aufweist und wobei jeder Quernut (2, 2') zwei in Abwicklungsebene des Profiles als Gerade gestaltete Basislinien (4, 4') zugeordnet sind, die die einander zugehörigen Endpunkte der Quernutränder an den Laufflächenbegrenzungslinien miteinander verbinden, dadurch gekennzeichnet, daß der Winkel der Basislinien (4, 4') gegenüber dem Reifenäquator von Quernut (2, 2') zu Quernut (2, 2') und/oder von Basislinie (4, 4') zu Basislinie (4, 4') in einem Bereich variiert wird.

2. Reifen nach Anspruch 1, dadurch gekennzeichnet, daß sämtliche Basislinien (4) gegenüber der Äquatorlinie (A-A) in gleichem Sinn schräg verlaufen.

3. Reifen nach Anspruch 1 oder 2, dadurch gekennzeichnet, daß der Winkel zwischen Basislinie (4) und Äquatorlinie (A-A) höchstens 85° und mindetens 60° beträgt.

4. Reifen nach einem der Ansprüche 1 bis 3, dadurch gekennzeichnet, daß die Neigungswinkel der Basislinien (4) um höchstens ±10°, mindestens um ±5° variiert werden.

5. Reifen nach einem der Ansprüche 1 bis 4, dadurch gekennzeichnet, daß die Variation der Neigungswinkel der Basislinien (4) eine statistische ist.

6. Reifen nach einem der Ansprüche 1 bis 5, dadurch gekennzeichnet, daß die Neigungswinkel einer festgelegten Anzahl von Basislinienpaaren oder Basislinien (4) variiert werden, wobei das Variationsmuster über den Reifenumfang wiederholt wird.

7. Reifen nach einem der Ansprüche 1 bis 6, dadurch gekennzeichnet, daß die Quernutkanten ihre zugehörigen Basislinien (4) nicht schneiden.

## Claims

1. Pneumatic vehicle tyre of a radial type of construction, having an asymmetrical tread surface profile which is adapted to the direction of rotation and has profile elements (1, 1'), which are separated from one another by transverse grooves (2, 2') and by circumferential grooves (3, 3'), which extend more especially in a straight line, each transverse groove (2, 2') traversing the tread surface from tread surface edge to tread surface edge without interruption and having a general configuration which is at least substantially arrow-shaped or arcuate when viewed over the tread surface width, and two base lines (4, 4') being associated with each transverse groove (2, 2'), which base lines are configured as straight lines when viewed with respect to the development plane of the profile and interconnect the end points of the transverse groove edges, which belong to one another, at the tread surface boundary lines, characterised in that the angle of the base lines (4, 4') relative to the centre of the tyre is varied in one region from transverse groove (2, 2') to transverse groove (2, 2') and/or from base line (4, 4') to base line (4, 4').

2. Tyre according to claim 1, characterised in that all of the base lines (4) extend inclinedly relative to the centre line (A-A) in the same direction.

3. Tyre according to claim 1 or 2, characterised in that the angle between base line (4) and centre line (A-A) is at most 85° and at least 60°.

4. Tyre according to one of claims 1 to 3, characterised in that the angles of inclination of the base lines (4) are varied by at most ±10° and by at least ±5°.

5. Tyre according to one of claims 1 to 4, characterised in that the variation in the angles of inclination of the base lines (4) is a statistical variation.

6. Tyre according to one of claims 1 to 5, characterised in that the angles of inclination of a fixed number of base line pairs or base lines (4) are varied, the variation pattern being repeated over the tyre circumference.

7. Tyre according to one of claims 1 to 6, characterised in that the transverse groove edges do not intersect their associated base lines (4).

## Revendications

1. Pneumatique pour véhicules de conception radiale comportant un profit de chape asymétrique associé au sens de rotation, qui comporte des éléments de profit (1, 1') séparés entre eux par des gorges transversales (2, 2') et en particulier par des gorges périphériques (3, 3') s'étendant de façon rectiligne, chaque gorge transversale (2, 2') traversant sans interruption la chape d'un bord à l'autre et, considérée sur la largeur de la chape, présentant au moins un tracé global dans l'essentiel à flèche ou chevron ou en forme d'arc et deux lignes de base (4, 4') sous forme de droites étant affectées à chaque gorge transversale (2, 2') dans le plan de développement ou de déroulement, lignes de base qui relient entre eux les points d'extrémité correspondants des bords de gorges transversales sur les lignes de limitation de chape, pneumatique pour véhicule caractérisé en ce que l'angle des lignes de base (4, 4') par rapport à la ligne équateur du pneumatique de la gorge transversale (2, 2') à la gorge transversale (2, 2') et/ou de la ligne de base (4, 4') à la ligne de base (4, 4') varie à l'intérieur d'une zone.

2. Pneumatique selon la revendication 1, caractérisé en ce que toutes les lignes de base (4) s'étendent obliquement dans le même sens par rapport à la ligne d'équateur (A-A).

3. Pneumatique selon la revendication 1 ou 2, caractérisé en ce que l'angle entre la ligne de base (4) et la ligne d'équateur (A-A) est au maximum de 85° et au minimum de 60°.

4. Pneumatique selon l'une des revendications 1 à 3, caractérisé en ce que les angles d'inclinaison des lignes de base (4) varient au maximum de ± 10° et au minimum de ± 5°.

5. Pneumatique selon l'une des revendications 1 à 4, caractérisé en ce que la variation des angles d'inclinaison des lignes de base (4) est une variation statistique.

6. Pneumatique selon l'une des revendications 1 à 5, caractérisé en ce que les angles d'inclinaison d'un nombre déterminé de couples de lignes de base ou de lignes de base (4) varient, le modèle de variation étant répété sur la périphérie du pneumatique.

7. Pneumatique selon l'une des revendications 1 à 6, caractérisé en ce que les bords de gorges transversales ne coupent pas leurs lignes de base correspondantes (4).
